(19) Europäisches Patentamt
European Patent Office
Office européen des brevets

(11) EP 1 600 790 B1

(12) EUROPEAN PATENT SPECIFICATION

(45) Date of publication and mention of the grant of the patent:
**19.04.2006 Bulletin 2006/16**

(51) Int Cl.:
*G01S 3/74* (2006.01) *H04B 7/08* (2006.01)

(21) Application number: **04011862.2**

(22) Date of filing: **19.05.2004**

(54) **Method for estimating the parameters of several superimposed signals and/or signal replicas**

Verfahren zur Schätzung von Parametern von überlagerten Signalen und/oder Signalreplikas

Méthode pour estimation des paramètres des signaux superposés et / ou des signaux répliqués

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(43) Date of publication of application:
**30.11.2005 Bulletin 2005/48**

(73) Proprietor: **Deutsches Zentrum für Luft- und Raumfahrt e.V.**
**51147 Köln (DE)**

(72) Inventor: **Selva, Jesus, Dr.**
**03610 Petrer (Alicante) (ES)**

(74) Representative: **von Kirschbaum, Albrecht**
**Waldstrasse 2b**
**82110 Germering (DE)**

(56) References cited:
- **RUIZ R ET AL: "CDMA blind channel equalization: a weighted subspace approach" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 2373-2377, XP010342311 ISBN: 0-7803-5565-2**
- **VIBERG M ET AL: "Detection and estimation in sensor arrays using weighted subspace fitting" IEEE TRANSACTIONS ON SIGNAL PROCESSING, IEEE, INC. NEW YORK, US, vol. 39, no. 11, November 1991 (1991-11), pages 2436-2449, XP002152004 ISSN: 1053-587X**
- **LIU Z-S ET AL: "RELAX-based estimation of damped sinusoidal signal parameters" SIGNAL PROCESSING, ELSEVIER SCIENCE PUBLISHERS B.V. AMSTERDAM, NL, vol. 62, no. 3, 1 November 1997 (1997-11-01), pages 311-321, XP004107328 ISSN: 0165-1684**
- **GOLUB G ET AL: "Separable nonlinear least squares: the variable projection method and its applications" INVERSE PROBL. (UK), INVERSE PROBLEMS, APRIL 2003, IOP PUBLISHING, UK, vol. 19, no. 2, 14 February 2003 (2003-02-14), pages R1-26, XP002285436 ISSN: 0266-5611**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 600 790 B1

## Description

The present invention relates to a method for estimating the parameters of several superimposed signals and/or signal replicas by use of a computation method of the Maximum Likelihood (ML) estimations based on the Modified Variable Projection (MVP) algorithm modelling a uniform and linear array of sensors receiving said signals and/or signal replicas.

A recurrent problem in many areas of signal processing is the estimation of several superimposed signals and/or signal replicas, and in the most common case, the signals are undamped exponentials. The following problems belong to this case:

- Estimation of the frequencies of several undamped exponentials.
- Estimation of the delays of several signals for large observation intervals or for signals with approximate finite domain.
- Estimation of the angles of arrival of several signals to a uniform and linear array of sensors.

There are many estimators in the state of art to solve these problems, but probably the most accurate are the Maximum Likelihood (ML) estimators.

For example the computation of optimal estimations of the Directions Of Arrival (DOA) of several signals to an antenna array, like the Maximum Likelihood (ML) estimations, requires to minimise a non-linear cost function.

For a generic array, probably the most efficient optimisation method is Newton's or one of its modifications (Mats Viberg, Björn Ottersten, and Thomas Kailath: "Detection and estimation in sensor arrays using weighted subspace fitting", IEEE Transactions on Signal Processing, Vol. 39, No. 11, pp. 2436-2449, Nov. 1991 and J.E. Dennis Jr. and Robert B. Schnabel: "Numerical Methods for Unconstrained Optimization and Nonlinear Equations, Number 16 in Classics in Applied Mathematics, SIAM, 1996). However, Newton's method in any of its variants is usually not employed, probably because it is deemed too complex. Instead, the specific features of the signal model are exploited in order to derive efficient iterative methods. For a Uniform and Linear Array (ULA), the polynomial parameterisation is exploited by methods like IQML and Iterative MODE. If the array size is large, methods like RELAX (Zheng-She Liu, Jian Li, and Petre Stoica: "RELAX-based estimation of damped sinusoidal parameters", in Signal Processing Journal, Vol. 62, pp. 311-321, Nov. 1997) improve the efficiency by performing one-dimensional searches using the FFT, again exploiting the specific structure of the ULA.

First an array signal model and the so called Weighted Subspace Fitting (WSF) estimator are now described.

The notation in this correspondence is the usual in the Array Processing field. It is convenient to remind the following conventions:

- New symbols or functions are defined using the symbol"≡",
- $[\mathbf{A}]_{\mathbf{m,k}}$ and $[\mathbf{a}]_{\mathbf{m}}$ respectively refer to the *m*, *k* and *m* components of the matrix **A** and vector **a**;
- The notation "·" in a sub-script refers either to a complete row or column: $[\mathbf{A}]_{\cdot,k}$ and $[\mathbf{A}]_{m,\cdot}$ are, respectively, the *k*-th column and *m*-th row of **A**;
- $1_N$ denotes a column vector of ones, and $O_{M\times N}$ a matrix of zeros of size $M \times N$;
- "$\odot$" denotes the Hadamard or element-by-element product.
- "tr{·}" is the trace operator;
- $\lfloor x \rfloor$ is the greatest integer smaller or equal than *x*.

Consider a Uniform Linear Array (ULA) of *M* sensors with response

$$[\mathbf{a}(w)]_m \equiv e^{j(m-1)w},\ m = 1,\ldots,M, \qquad (1)$$

where *w* is the spatial frequency, and assume a scenario in which *K* waves impinge the array, carrying signals $s_1(t)$, $s_2(t)$,...,$s_K(t)$ with spatial frequencies $w_1$, $w_2$,..., $w_K$. A compact model results if we collect all spatial frequencies, array responses, and signals in a vector **w**, a matrix **A(w)**, and a vector ***s***(*t*), respectively. Define

$$[\mathbf{w}]_k \equiv w_k,\quad [\mathbf{s}(t)]_k \equiv s_k(t),\quad and\ [\mathbf{A}(\mathbf{w})]_{\cdot,k} \equiv \mathbf{a}(\mathbf{w}_k). \qquad (2)$$

The vector of signals at the array can be written as

$$\mathbf{x}(t) = \mathbf{A}(\mathbf{w})\mathbf{s}(t) + \mathbf{n}(t), \quad (3)$$

where $\mathbf{n}(t)$ is a vector of independent complex white Gaussian processes of variance $\sigma_n^2$.

Next, assume that $\mathbf{x}(t)$ is sampled at epochs 0,1, ...,$N$-1. Again, a compact model is attained if we stack the vectors $\mathbf{x}(n\text{-}1)$, $\mathbf{s}(n\text{-}1)$, and $\mathbf{n}(n\text{-}1)$ in matrices for all $n$. Define for $n$ = 1,...,$N$,

$$[\mathbf{X}]_{\cdot,n} \equiv \mathbf{x}(n-1), \quad [\mathbf{S}]_{\cdot,n} \equiv \mathbf{s}(n-1), \text{ and } [\mathbf{N}]_{\cdot,n} \equiv \mathbf{n}(n-1). \quad (4)$$

We obtain the model

$$\mathbf{X} = \mathbf{A}(\mathbf{w})\mathbf{S} + \mathbf{N}. \quad (5)$$

Given the sample covariance matrix $\mathbf{XX^H}$ the first step in the WSF method consists of computing its eigenvalues $\lambda_1, ..., \lambda_M$, with $\lambda_1 \geq \lambda_2 \geq ... \geq \lambda_M$, and a $M \times K$ matrix $\hat{\mathbf{U}}$, $\hat{\mathbf{U}}^{\mathbf{H}}\hat{\mathbf{U}} = \mathbf{I}$, that spans the invariant subspace corresponding to the greater $K$ eigenvalues. Then, the WSF estimation is the argument that minimises the cost function

$$\mathbf{L} \equiv \mathrm{tr}\left\{(\mathbf{I} - \mathbf{P})\,\hat{\mathbf{U}}\,\mathbf{W}\,\hat{\mathbf{U}}^{\mathbf{H}}\right\}, \quad (6)$$

where $\mathbf{P} \equiv \mathbf{A}(\mathbf{A}^H\mathbf{A})^{-1}\mathbf{A}^H$ is the projection matrix of $\mathbf{A}$, $\mathbf{W}$ is the diagonal matrix

$$[\mathbf{W}]_{k,r} \equiv \begin{cases} \left(\lambda_k - \sigma_n^2\right)^2 / \lambda_k & \text{if } k = r, \\ 0 & \text{if } k \neq r, \end{cases} \quad (7)$$

$$k = 1, ..., \tilde{K}, \quad r = 1, ..., \tilde{K},$$

and $\hat{\sigma}_n^2$ is the noise variance estimation

$$\hat{\sigma}_n^2 \equiv \frac{1}{M - \tilde{K}} \sum_{m=\tilde{K}+1}^{M} \lambda_m. \quad (8)$$

An outline of the MVP implementation follows now.

In Newton's method, the value at the $p$+1 iteration, $\mathbf{w}^{(p+1)}$, is computed from the value at the $p$-th iteration, $\mathbf{w}^{(p)}$, through the formula

$$\mathbf{w}^{(p+1)} = \mathbf{w}^{(p)} - \mu_p \mathbf{H}^{-1} \nabla \mathbf{L}, \qquad (9)$$

where $\nabla$L and **H** are the gradient and Hessian of the cost function in equation (6) evaluated at $\mathbf{w}^{(p)}$, and $\mu_p$ is a coefficient used to adjust the step size in order to assure a descendant direction. In the Modified Variable Projection (MVP) method, the Hessian is substituted by an approximation in order to reduce the complexity. The gradient and the approximate Hessian in this method are given by the formulas

$$\nabla \mathbf{L} \equiv -2\mathrm{Re}\{\mathrm{diag}\{\mathbf{A}^{\dagger}\hat{\mathbf{U}}\,\mathbf{W}\hat{\mathbf{U}}^{\mathbf{H}}(\mathbf{I}-\mathbf{P})\mathbf{D}\}\},$$

and

$$\mathbf{H} \equiv 2\mathrm{Re}\{[\mathbf{D}^{\mathbf{H}}(\mathbf{I}-\mathbf{P})\mathbf{D}]^{\mathbf{T}} \odot [\mathbf{A}^{\dagger}\hat{\mathbf{U}}\,\mathbf{W}\hat{\mathbf{U}}^{\mathbf{H}}(\mathbf{A}^{\dagger})^{\mathbf{H}}]\}, \qquad (10)$$

where **D** is

$$[\mathbf{D}(\mathbf{w})]_{\cdot,k} \equiv \frac{\mathrm{d}}{\mathrm{d}w}\mathbf{a}(w_k), \quad k = 1,\ldots,K. \qquad (11)$$

The improvement in efficiency obtained in this correspondence is based on repeatedly applying the properties of the Vandermonde structure of **A** to the elementary operations involved in the computation of $\nabla$L and **H**.

In order to analyse the computation of these matrices, let us first insert the formulas of $\mathbf{A}^{\dagger}$ and **P** in equation (10), and define the following data matrix

$$[\hat{\mathbf{U}}_w]_{,r} \equiv \frac{\lambda_r - \hat{\sigma}_n^2}{\sqrt{\lambda_r}}[\hat{\mathbf{U}}]_{,r}, \quad r = 1,\ldots,\tilde{K}. \qquad (12)$$

We have in equation (10),

$$\nabla \mathbf{L} \equiv -2\mathrm{Re}\{\mathrm{diag}\{(\mathbf{A}^{\mathbf{H}}\mathbf{A})^{-1}\mathbf{A}^{\mathbf{H}}\hat{\mathbf{U}}_w\hat{\mathbf{U}}_w^{\mathbf{H}}\cdot(\mathbf{I}-\mathbf{A}(\mathbf{A}^{\mathbf{H}}\mathbf{A})^{-1}\mathbf{A}^{\mathbf{H}})\mathbf{D}\}\},$$

$$\mathbf{H} \equiv 2\mathrm{Re}\{[\mathbf{D}^{\mathbf{H}}(\mathbf{I}-\mathbf{A}(\mathbf{A}^{\mathbf{H}}\mathbf{A})^{-1}\mathbf{A}^{\mathbf{H}})\mathbf{D}]^{\mathbf{T}} \odot [(\mathbf{A}^{\mathbf{H}}\mathbf{A})^{-1}\mathbf{A}^{\mathbf{H}}\hat{\mathbf{U}}_w\hat{\mathbf{U}}_w^{\mathbf{H}}\mathbf{A}(\mathbf{A}^{\mathbf{H}}\mathbf{A})^{-1}]\}. \qquad (13)$$

The first reduction in the number of operations consists of not repeating the same computation more than once. An evaluation procedure that avoids repetitions is presented in table I, in which several transitory variables with names **R**(.) are employed. The complexity order has been indicated to the right in each step.

| | | | |
|---|---|---|---|
| 1) | $R_{AA} = A^H A$, $R_{AA} = A^H A$, | $R_{AD} = A^H R_{AD} = A^H$, | |
| | $R_{DD} = D^H D$, | | $O(MK^2)$ |
| 2) | $R_{AU} = A^H \hat{U}_w$, | $R_{DU} = D^H \hat{U}_w$, | $O(MK\tilde{K})$, |
| 3) | $R_{AAI} = (R_{AA})^{-1}$, | $R_1 = R_{AAI} R_{AD}$, | |

Table continued

| | | |
|---|---|---|
| | $\mathbf{R}_2 = \mathbf{R}_{AD}^H \mathbf{R}_1,$ | $O(K^3)$ |
| 4) | $R_3 = R_{AAI} R_{AU},$ $\quad \mathbf{R}_4 = \mathbf{R}_3 \mathbf{R}_3^H,$ | |
| | $\mathbf{R}_5 = \mathbf{R}_3^H \mathbf{R}_{AD},$ | $O(K^2\tilde{K})$ |
| 5) | $\nabla L = -2\mathrm{Re}\{\mathrm{diag}\{\mathbf{R}_3(\mathbf{R}_{DU}^H - \mathbf{R}_5)\}\}$ | $O(K\tilde{K})$ |
| 6) | $\mathbf{H} = 2\mathrm{Re}\{(\mathbf{R}_{DD} - \mathbf{R}_2)^T \odot \mathbf{R}_4\}$ | $O(K^2)$ |
| 7) | $\mathbf{w}^{(p+1)} = \mathbf{w}^{(p)} - \mu_p \mathbf{H}^{-1} \nabla \mathbf{L},$ | $O(K^3)$ |

Table I

Table I shows the steps in the computation of ∇L and **H** in equation (13) with complexity order. The variables $\mathbf{R}_{(.)}$ are transitory.

We can see that for $M>>K$ the most expensive operations are the correlations in steps 1) and 2). To compute $\mathbf{A}^H\mathbf{A}$ requires to carry out the inner products $\mathbf{a}(w_k)^H\mathbf{a}(w_r)$, $k \le r$, for $k$, $r = 1, \ldots, K$, with a $O(MK^2)$ cost. This cost can be reduced to order $O(K^2)$ if we realise that $\mathbf{a}(w_k)^H\mathbf{a}(w_r)$ is the geometric series $\sum_{m=1}^{M} e^{j(m-1)(w_r-w_k)}$, for which there is a closed-form formula, namely

$$\sum_{m=1}^{M} e^{j(m-1)(w_r-w_k)} = \frac{e^{jM(w_r-w_k)}-1}{e^{j(w_r-w_k)}-1}. \qquad (14)$$

Something similar happens with $\mathbf{A}^H\mathbf{D}$ and $\mathbf{D}^H\mathbf{D}$, and it is actually possible to write the components of these three products as linear combinations of sums of the form

$$\sum_{m=1}^{M} e^{j(m-1)w}, \quad \sum_{m=1}^{M} m e^{j(m-1)w}, \quad \text{and} \quad \sum_{m=1}^{M} m^2 e^{j(m-1)w}, \qquad (15)$$

for a proper choice of $w$. This complexity reduction is analysed later.

The next step with highest complexity is step 2). In this step, it is quite inefficient to directly compute powers of $e^{-jw}$ for $w = w_1, w_2, \ldots, w_K$ in order to form **A**, and then perform the matrix product. The Vandermonde structure provides again a fast computation method if we realise that any component $\mathbf{A}^H \hat{\mathbf{U}}_W$, say $|\mathbf{A}^H\hat{\mathbf{U}}_w|_{k,r}$ is equal to the value of the polynomial with coefficients $|\hat{\mathbf{U}}_w|_{,r}$ at $e^{-jw_k}$. Also, the $k, r$ component of $\mathbf{D}^H\hat{\mathbf{U}}_w$, $|\mathbf{D}^H\hat{\mathbf{U}}_w|_{k,r}$ is equal to a constant times the value of the derivative of the same polynomial at $e^{-jw_k}$. Horner' s synthetic division (Wiliam H. Press et al.: "Numerical Recipes in C", Cambridge University Press, 1997, section 5.3) is probably the most efficient method to evaluate a polynomial and its derivative using only sums and products without having to compute any integral power of the polynomial variable. In section I-B of the following part of description, this method is applied to the MVP iteration.

Though Horner's synthetic division is a very efficient method, the complexity of step 2) of table I is still $O(MK\tilde{K})$ given that all elements of $\hat{\mathbf{U}}$ have to be accessed in order to compute $\mathbf{A}^H \hat{\mathbf{U}}_w$ and $\mathbf{D}^H \hat{\mathbf{U}}_w$. For large $M$, the computation of these products would absorb most of the computational burden. By this invention a method is presented that makes it possible to compute sums of the form

$$\mathbf{b}^T \mathbf{a}(w) = \sum_{m=1}^{M} b_m e^{jw} \qquad (16)$$

for a vector of coefficients $[\mathbf{b}]_m \equiv b_m$ in just a few flops, once a matrix of interpolation coefficients has been pre-computed. Since to carry out the products $\mathbf{A}^H \hat{\mathbf{U}}_w$ and $\mathbf{D}^H \hat{\mathbf{U}}_w$ can be regarded as a series of sums of the form of equation (16), the complexity of step 2) of table I can be reduced from $O(MK\tilde{K})$ to $O(N_I K\tilde{K})$, where $N_I$ is a small number given by the required interpolation accuracy. The computation of the matrices of interpolation coefficients requires only $O(N_I M \log_2 M)$ because it can be performed through the FFT. The method is introduced by this invention.

An efficient computation of the MVP iteration through conventional methods will be described in the following section (part I).

In this section, we present a detailed analysis of the MVP iteration complexity. The correlation with the data is performed through Horner's synthetic division, leaving the correlation method based on the FFT for the next section.

Let us start by grouping the products that yield $K \times \tilde{K}$ or $K \times \tilde{K}$ matrices in equations (6) and (13). We obtain

$$\mathbf{L} = \sum_{k=1}^{K} \frac{\lambda_k^2}{\lambda_k - \hat{\sigma}_n^2} - \mathrm{tr}\left\{\left(\hat{\mathbf{U}}_w^H \mathbf{A}\right) \cdot \left(\mathbf{A}^H \mathbf{A}\right)^{-1} \cdot \left(\mathbf{A}^H \hat{\mathbf{U}}_w\right)\right\} \qquad (17)$$

$$\nabla \mathrm{L} = -2\mathrm{Re}\left\{\mathrm{diag}\left\{\left(\mathbf{A}^H\mathbf{A}\right)^{-1} \cdot \left(\mathbf{A}^H\hat{\mathbf{U}}_w\right) \cdot \left(\hat{\mathbf{U}}_w^H\mathbf{D}\right) - \left(\mathbf{A}^H\mathbf{A}\right)^{-1} \cdot \left(\mathbf{A}^H\hat{\mathbf{U}}_w\right) \cdot \left(\hat{\mathbf{U}}_w^H\mathbf{A}\right) \cdot \left(\mathbf{A}^H\mathbf{A}\right)^{-1} \cdot \left(\mathbf{A}^H\mathbf{D}\right)\right\}\right\} \qquad (18)$$

and

$$\mathbf{H} \equiv 2\mathrm{Re}\left\{\left[\left(\mathbf{D}^H \mathbf{D}\right) - \left(\mathbf{D}^H \mathbf{A}\right) \cdot \left(\mathbf{A}^H \mathbf{A}\right)^{-1} \cdot \left(\mathbf{A}^H \mathbf{D}\right)\right]^T \odot \left[\left(\mathbf{A}^H \mathbf{A}\right)^{-1} \cdot \left(\mathbf{A}^H \hat{\mathbf{U}}_w\right) \cdot \left(\hat{\mathbf{U}}_w^H \mathbf{A}\right) \cdot \left(\mathbf{A}^H \mathbf{A}\right)^{-1}\right]\right\} \qquad (19)$$

In the following subsections, the computational cost of jointly evaluating equations (17), (18), (19), and $\mathbf{H}^{-1}\nabla\mathrm{L}$ is analysed, and measures in real flops are provided. Throughout the description, the computational burden is measured in real flops. A real flop (floating point operation) is the cost of performing either a real multiplication or a real sum, and the complex multiplication or a real sum, and the complex multiplication and sum cost 6 and 2 real flops, respectively. It is shown that the most expensive operations are $\mathbf{A}^H \hat{\mathbf{U}}_w$ and $\mathbf{D}^H \tilde{\hat{\mathbf{U}}}_w$, and that to compute $\mathbf{A}^H\mathbf{A}$, $\mathbf{A}^H\mathbf{D}$, and $\mathbf{D}^H\mathbf{D}$ only requires $O(K^2)$ flops. The total computational cost is roughly $16MK\tilde{K} + (122/3)K^3$ flops.

I-A: $\mathbf{A}^H \hat{\mathbf{U}}_w$ and $\mathbf{D}^H \hat{\mathbf{U}}_w$ products

The $r$-th column of $\mathbf{A}^H \hat{\mathbf{U}}_w$ can be regarded as the set of values of the polynomial

$$\mathrm{p}_r(z) \equiv \sum_{m=1}^{M} \left[\hat{\mathbf{U}}_w\right]_{m,r} z^{m-1} \qquad (20)$$

at $z = e^{-jw_1}, e^{-jw_2}, \ldots, e^{-jw_x}$. Also, the r-th column of $\mathbf{D^H \hat{U}_w}$ can be regarded as the values at the same abscissas of $-jzp'_r(z)$, where $p'_r(z)$ is the differential in $z$ of $p_r(z)$. We may check this by recalling the definition of $\mathbf{a}(w)$ and $\mathbf{D}$ in equations (1) and (11), respectively:

$$\left[\mathbf{D}^H \hat{\mathbf{U}}_w\right]_{k,r} = \sum_{m=1}^{M} [\mathbf{D}]_{m,k}^{*} \left[\hat{\mathbf{U}}_w\right]_{m,r} = \sum_{m=1}^{M} \left[\frac{d}{dw}\mathbf{a}(w_k)\right]_m^{*} \left[\hat{\mathbf{U}}_w\right]_{m,r} = \sum_{m=1}^{M} -j(m-1)e^{-j(m-1)w_k}\left[\hat{\mathbf{U}}_w\right]_{m,r} = -je^{-jw_k}p'_r\left(e^{-jw_k}\right). \quad (21)$$

Therefore, we only require to evaluate $p_r(e^{-jw_k})$ and $p'_k(e^{-jw_k})$ for $k = 1,...,K$ and $r = 1, \ldots, \tilde{K}$ to compute $\mathbf{A^H \hat{U}_w}$ and $\mathbf{D^H \hat{U}_w}$.

The fastest method for this is cited Horner's synthetic division. In Fig.1, we show the pseudocode that computes these two matrices. $16MK\tilde{K} + 6K\tilde{K}$ real flops are required. In this pseudo-code, we have defined $z_k = e^{jw_k}$, $k = 1,...,K$. After evaluation $\mathbf{M}$ and $\mathbf{M_D}$ contain $\mathbf{A^H \hat{U}_w}$ and $\mathbf{D^H \hat{U}_w}$.

I-B: $\mathbf{A^HA}$, $\mathbf{A^HD}$ and $\mathbf{D^HD}$ products

The components of $\mathbf{A^HA}$ are sums of geometric series. Specifically, we have the following formula

$$\left[\mathbf{A}^H \mathbf{A}\right]_{k,r} = \sum_{m=1}^{M} e^{j(m-1)(w_r - w_k)} = \frac{e^{jM(w_r - w_k)} - 1}{e^{j(w_r - w_k)} - 1}. \quad (22)$$

Also, the components of $\mathbf{A^HD}$ and $\mathbf{D^HD}$ can be written in terms of sums of the forms given in equation (15) for which it is not difficult to calculate closed-form expressions using, for example, the properties of the Z Transform. A possible set of expressions in which we have attempted to minimise the number of operations is the following:

$$s_0 = \frac{u^M - 1}{u - 1}, \quad s_1 = (-j)\frac{-1 - (M-1)u^M + s_0}{u - 1}, \quad s_2 = \frac{-1 + (M-1)^2 u^M + s_0 + 2js_1}{u - 1} \quad (23)$$

If we set $u \equiv e^{j(w_r - w_k)}$, then the values of $s_0$, $s_1$ and $s_2$ are $\lfloor \mathbf{A^H A} \rfloor_{k,r}$, $\lfloor \mathbf{A^H D} \rfloor_{k,r}$ and $\lfloor \mathbf{D^H D} \rfloor_{k,r}$ respectively. To calculate $u$ and $u^M$ for $k = 1,...,K$ and $k < r \leq K$ requires $2K$ exponentials and $K(K-1)/2$ complex products, which is equivalent to $3K^2+K$ real flops. (We count two flops per exponential.) To evaluate equation (23) requires 46 flops, and this has to be done $K(K-1)/2$ times. So, the three matrices can be calculated in $26K^2 - 22K$ flops.

I-C: Inverse of $\mathbf{A^HA}$

Given that $\mathbf{A^HA}$ is Hermitian and positive definite, its inverse can be calculated through a Cholesky decomposition and solving two triangular systems (Gene H. Golub and Charles F. Loan: "Matrix Computations", The John Hopkins University Press, Third Edition, 1996, chapter 4). The computational burden of these operations is $(32/3)K^3$.

In terms of numerical sensitivity this is the most critical step. If any two angular frequencies differ in a very small amount, the resulting matrix would have a high condition number, and the inverse of $\mathbf{A^HA}$ would be numerically incorrect. This situation might be the result of a failure to converge to the global minimum, or to an over-estimation of the number of signals. In practice, the frequency differences should be checked before performing the inversion.

I-D: Computation of the MVP direction

The linear system $\mathbf{H}^{-1}\nabla L$ roughly requires (8/3)/$K^3$ flops. It can be solved through a Cholesky decomposition and two triangular linear systems.

I-E: Matrix Products

Besides the previous operations, it is necessary to perform six products of two $K \times K$ matrices, plus some operations of order $K^2$. It is possible to save some flops by exploiting the properties of the "Re{.}" and "diag{.}" operators. The total computational burden of these operations is roughly $42K^3$.

I-F: Cost value computation

Sometimes, it is necessary to introduce a $\mu_p < 1$ in equation (9) in order to assure a descendant direction, which requires to compute the cost function value. For this, it is necessary to compute $\mathbf{A}^H \hat{\mathbf{U}}_w$, a Cholesky decomposition, and to invert a triangular matrix. The cost is roughly $16MK\tilde{K}$ flops.

The existing techniques have a computational burden that grows with the product of the number of signals to be estimated times the data size. This produces a large computational burden.

It is an object of the present invention to provide a method to compute the Maximum Likelihood estimator with a significantly smaller computations burden.

The invention is characterised by decoupling said computation into two steps, the first one computing a matrix of interpolation coefficients by performing some Fast Fourier Transforms (FFTs), and the second one performing an iterative procedure, both steps in application to the MVP-method. In the first step, a coefficient matrix is computed with a complexity that is proportional to the one of the Fast Fourier Transform. In the second step, an iterative procedure is carried out with a complexity that is independent of the data size. In this way, the computational burden is dramatically reduced and very efficient. The decoupling is based upon the interpolation formula developed in the following part of the description.

According to this invention, it is proposed not to give up Newton's method but instead to employ the structure of the model to implement Newton's iteration more efficiently. There is presented an implementation of the Modified Variable Projection (MVP) method in the article of L. Kaufman: "A variable projection method for solving separable nonlinear least squares problems", BIT, Vol. 15, pp. 49-57, 1975 and in the aforementioned article of Mats Viberg, Björn Ottersten, and Thomas Kailath: "Detection and estimation in sensor arrays using weighted subspace fitting", IEEE Transactions on Signal Processing, Vol. 39, No. 11, pp. 2436-2449, Nov. 1991, a Newton-type method, for the ULA problem which mainly has two advantages. First, the cost function is not changed at all, the estimation computed being the actual ML or Weighted Subspace Fitting (WSF) estimation in contrast to what happens in methods like Iterative MODE and IQML. And second, and most important, the complexity achieved is surprisingly small. It is shown that the most expensive matrix products in the MVP iteration can be either evaluated in closed form, efficiently computed via Horner's synthetic division, or interpolated through the new and inventive technique based on the FFT. The computation of the WSF or ML estimator according to the present invention is divided into a preliminary step in which a few FFTs are computed, and an iterative step with a complexity that is independent of the array size.

Further aspects and applications of the present invention are defined in claims 2 to 5.

Fast correlation using the FFT in correspondence with the present invention will be described in the following part II.

The invention is described with reference to the accompanying drawings in which:

Fig.1 shows the already described pseudo-code that computes the matrices $\mathbf{A}^H \hat{\mathbf{U}}_w$ and $\mathbf{D}^H\hat{\mathbf{U}}_w$ of the known MVP iteration;

Fig.2 shows a simulated example of the Root-Mean-Square-Error [rad] as function of the array signal-to-noise ratio [dB];

Fig.3 shows a simulated example of the probability of resolution as function of the array signal-to-noise ratio [dB];

Fig.4 shows a simulated example of the average number of real flops as function of the array signal-to-noise ratio [dB];

Fig.5 shows a simulated example of the average number of iterations as function of the array signal-to-noise ratio [dB]; and

Fig.6 shows a simulated example of the percentage of invalid trials [%] as function of the array signal-to-noise ratio [dB].

In the MVP iterative procedure, i.e. step 2) in table I consists of evaluating for many different values of *w* several sums of the form

$$\sum_{m=1}^{M} b_m e^{j(m-1)w} = \mathbf{b}^T \mathbf{a}(w), \text{ with } [\mathbf{b}]_m \equiv b_m . \quad (24)$$

For example, this sum would be equal to $[\mathbf{A}^H \hat{\mathbf{U}}_\mathbf{w}]_{k,r}$, if we substitute in it $b_m$ by $[\hat{\mathbf{U}}_\mathbf{w}]_{m,r}$ and *w* by $-w_k$. To evaluate equation (24) requires O(*M*) realflops.

The key idea in the proposed method according to the invention lies in dividing the domain of the exponentials that appear in equation (24) into small subdomains, and then applying a polynomial interpolation to each of them. Consider a regular grid of *P* angular frequencies $w_{o,p}$, $p = 1, ..., P$, that covers the domain of *w*. For a given *w*, if u is the difference of *w* with the closest frequency in the grid $w_{o,p}$, then $e^{j(m-1)w}$ can be written as

$$e^{j(m-1)w} = e^{j(m-1)w_{o,p}} e^{j(m-1)u} , \quad (25)$$

where $u \equiv w - w_{o,p}$, and the domain of *u* is *P* times smaller than the domain of *w*. If *P* is sufficiently large, then $e^{j(m-1)u}$ can be approximated by a polynomial of small degree, and from equations (25) and (24), the same is the case with $e^{j(m-1)w}$ and $\mathbf{b}^T \mathbf{a}(w)$. Once the interpolation coefficients are available, to compute $\mathbf{b}^T \mathbf{a}(w)$ only requires to determine to what subdomain *w* belongs to, and then use the interpolation formula corresponding to that subdomain. As we will see in the next subsections, the computation of the interpolation coefficients only requires a few FFTs, and can be performed before starting the MVP iterative procedure.

II-A: Interpolation of the Fourier sum in Equation (24)

Let us take a regular grid of frequencies $w_{o,p} \equiv 2\pi(p - 1)/P$, $p = 1, \dots, P$ for an integer *P* that will be selected later. For any *w* there is a frequency in the grid $w_{o,p}$ and an integer *r* for which the distance $|w - 2\pi r - w_{o,p}|$ is minimum. *p* and *r* can be determined from the inequalities

$$\begin{aligned} -\frac{\pi}{P} \le w - 2\pi r < 2\pi - \frac{\pi}{P}, \text{ and} \\ 2\pi \frac{p-1}{P} - \frac{\pi}{P} \le w - 2\pi r < 2\pi \frac{p-1}{P} + \frac{\pi}{P}. \end{aligned} \quad (26)$$

The inequalities in the first line select a *r* so that $w$-$2\pi r$ lies in $[-\pi / P, 2\pi - \pi / P[$; and, the inequalities in second line determine the index *p* of the $w_{o,p}$ closest to $w - 2\pi r$. The solution of equation (26) is

$$r = \left\lfloor \frac{w}{2\pi} + \frac{1}{2P} \right\rfloor, \quad p = \left\lfloor \frac{Pw}{2\pi} - 2\pi r + \frac{3}{2} \right\rfloor . \quad (27)$$

In terms of $w_{o,p}$, *r*, and *p*, *w* can be written as

$$w = w_{o,p} + 2\pi r + u, \quad (28)$$

where $u$ is the shift of $w$-$2\pi r$ from $w_{o,p}$ which is inside $[-\pi/P, \pi/P[$.

Next, we substitute equation (28) in $\mathbf{b}^T \boldsymbol{a}(\boldsymbol{w})$:

$$\begin{aligned} \mathbf{b}^T \mathbf{a}(w) &= \sum_{m=1}^{M} b_m e^{j(m-1)w} \\ &= \sum_{m=1}^{M} b_m e^{j(m-1)(w_{o,p}+2\pi r+u)} \\ &= \sum_{m=1}^{M} b_m e^{j2\pi(m-1)(p-1)/P} e^{j(m-1)u}. \end{aligned} \quad (29)$$

Comparing this expression with equation (24), we can see that the sampling has reduced by a factor $P$ the length of the domains of the exponentials involved in computing $\mathbf{b}^T \boldsymbol{a}(\boldsymbol{w})$: in equation (24), since $0 \le m < M - 1$ and $0 \le w < 2\pi$, the exponent of $e^{j(m-1)w}$ is inside the range $[0, 2\pi(M - 1)]$ for any $m$ and $w$; but in the last expression, since $[-\pi / P \le u < \pi / P]$, the exponent of $e^{j(m-1)u}$ lies inside $[-\pi(M - 1) / P, \pi(M - 1) / P]$ for any $m$ and $u$.

We may choose a sufficiently large Pso that $e^{j(m-1)u}$ can be interpolated using a polynomial of small degree. Assume that we have computed a polynomial approximation to $e^{jw}$ in a range $[-\Delta w, \Delta w]$ of the form

$$e^{jw} = \sum_{q=1}^{N_I} h_q w^{q-1} + \varepsilon(w), \quad (30)$$

where $\varepsilon(w)$ is the approximation error. If we take a $P$ so that $\pi(M - 1) / P < \Delta w$, i.e., $P > \pi(M - 1) / \Delta w$, then we may apply the polynomial approximation in equation (30) to $e^{j(m-1)u}$. We have in equation (29):

$$\begin{aligned} \mathbf{b}^T \mathbf{a}(w) &\approx \sum_{m=1}^{M} b_m e^{j2\pi(m-1)(p-1)/P} \sum_{q=1}^{N_I} h_q (m-1)^{q-1} u^{q-1} \\ &= \sum_{q=1}^{N_I} \sum_{m=1}^{M} b_m h_q (m-1)^{q-1} e^{j2\pi(m-1)(p-1)/P} u^{q-1}. \end{aligned} \quad (31)$$

Define the Inverse DFT matrix

$$[\mathbf{F}_P]_{a,p} \equiv \frac{1}{P} e^{j2\pi(a-1)(p-1)/P}, \quad a, p = 1, \ldots, P; \quad (32)$$

and the matrix of coefficients

$$[\mathbf{C}]_{m,q} \equiv h_q (m-1)^{q-1}. \quad (33)$$

Substituting in equation (31), we have

$$\begin{aligned} \mathbf{b}^T \mathbf{a}(w) &\approx P \sum_{q=1}^{N_I} \sum_{m=1}^{M} [\mathbf{b}]_m [\mathbf{C}]_{m,q} [\mathbf{F}_P]_{p,m} u^{q-1} \\ &\approx P \sum_{q=1}^{N_I} \sum_{m=1}^{M} [\mathbf{F}_P]_{p,m} \left[ \left( \mathbf{b}\, \mathbf{1}_{N_I}^T \right) \odot \mathbf{C} \right]_{m,q} u^{q-1} \\ &= P \sum_{q=1}^{N_I} \left[ \mathbf{F}_P \left( \left( \mathbf{b}\, \mathbf{1}_{N_I}^T \right) \odot \mathbf{C} \right) \right]_{p,q} u^{q-1}. \end{aligned} \quad (34)$$

In order to employ all components of $\mathbf{F}_p$ and benefit from the low complexity of the FFT, we assume $\Delta w < \pi$ or equivalently that $P \geq M$, and complete $\mathbf{b}\, \mathbf{1}_{N_I}^T \odot \mathbf{C}$ with a zero-padding matrix row-wise. In equation (34), we have

$$\begin{aligned} \mathbf{b}^T \mathbf{a}(w) &\approx P \sum_{q=1}^{N_I} \sum_{m=1}^{M} [\mathbf{F}_P]_{p,m} \left[ \left( \mathbf{b}\, \mathbf{1}_{N_I}^T \right) \odot \mathbf{C} \right]_{m,q} u^{q-1} \\ &= P \sum_{q=1}^{N_I} \sum_{a=1}^{M} [\mathbf{F}_P]_{p,a} \begin{bmatrix} \left( \mathbf{b}\, \mathbf{1}_{N_I}^T \right) \odot \mathbf{C} \\ \mathbf{0}_{(P-M) \times N_I} \end{bmatrix}_{a,q} u^{q-1} \\ &= P \sum_{q=1}^{N_I} \left[ \mathbf{F}_P \begin{pmatrix} \left( \mathbf{b}\, \mathbf{1}_{N_I}^T \right) \odot \mathbf{C} \\ \mathbf{0}_{(P-M) \times N_I} \end{pmatrix} \right]_{p,q} \cdot u^{q-1}. \end{aligned} \quad (35)$$

This is the desired expression according to the present invention. We can see that the interpolation coefficients for all $w_{o,p}$ can by computed by making the Hadamard product of **b** with every column of **C**, adding zero-padding, and taking the Inverse DFT of the result. The cost of these operations is $O(N_I P \log_2 P)$. Note that by differentiating in $u$ this expression, we obtain an interpolation formula for $\mathbf{b}^T \mathbf{a}'(\mathbf{w})$.

II-B: Boundaries on the interpolation error

From equations (30) and (29), the error in the interpolation is

$$\begin{aligned} \varepsilon_{\mathbf{b}}(w) &\equiv \mathbf{b}^T \mathbf{a}(w) - \\ &\sum_{m=1}^{M} b_m e^{j2\pi(m-1)(p-1)/P} \sum_{q=1}^{N_I} h_q (m-1)^{q-1} u^{q-1} \\ &= \sum_{m=1}^{M} b_m e^{j2\pi(m-1)(p-1)/P} \varepsilon((m-1)u). \end{aligned} \quad (36)$$

Table II shows a polynomial approximation of $e^{jw}$.
h(w)

Table II

| | | | |
|---|---|---|---|
| +0.999999999779501 | | $+j0.999999999982988$ | w |
| -0.499999993561852 | $w^2$ | $-j0.166666666169556$ | $w^3$ |
| +0.0416666361848792 | $w^4$ | $+j0.00833333097876213$ | $w^5$ |
| -0.00138883605772982 | $w^6$ | $-j0.000198408616972258$ | $w^7$ |
| $+2.47601234957978\cdot 10^{-5}$ | $w^8$ | $+j2.752529383739\cdot 10^{-6}$ | $w^9$ |
| $-2.60508847934104\cdot 10^{-7}$ | $w^{10}$ | $-j2.3889607713183\cdot 10^{-8}$ | $w^{11}$ |

$|e^{jw} - h(w)|<2.2\cdot 10^{-10}$ and $|je^{jw} - h'(w)|<7\cdot 10^{-9}$ for $w$ in $[-\pi/2,\pi/2]$.

If in the initial interpolation formula in equation (30), the error follows $|X\varepsilon(w)| \leq \varepsilon_{max}$ and $|\varepsilon'(w)| \leq \varepsilon'_{max}$, then we have from equation (36) the bounds on the interpolation error

$$|\varepsilon_b(w)| = \left|\sum_{m=1}^{M} b_m e^{j2\pi(m-1)(p-1)/P} \varepsilon((m-1)u)\right| \leq \sum_{m=1}^{M} |b_m| \cdot |\varepsilon((m-1)u)| \leq \sum_{m=1}^{M} |b_m| \cdot \varepsilon_{max}, \quad (37)$$

and

$$|\varepsilon'_b(w)| = \left|\sum_{m=1}^{M} b_m e^{j2\pi(m-1)(p-1)/P} (m-1)\varepsilon'((m-1)u)\right| \leq \sum_{m=1}^{M} |b_m| \cdot (m-1) \cdot |\varepsilon((m-1)u)| \leq \sum_{m=1}^{M} |b_m| \cdot (m-1) \cdot \varepsilon'_{max}. \quad (38)$$

II-C: Application to the MVP method

Regarding the MVP method, we only need to compute a matrix of coefficients $\mathbf{B}_k$ for each column of $\hat{\mathbf{U}}_w$, before starting the iterative procedure, i.e., we compute for $r = 1,...,\widetilde{K}$,

$$\mathbf{B}_r \equiv P\,\mathbf{F}_P \begin{bmatrix} \left([\hat{\mathbf{U}}_w]_{,r} \mathbf{1}_{N_r}^T\right) \odot \mathbf{C} \\ \mathbf{0}_{(P-M)\times N_r} \end{bmatrix}. \quad (39)$$

In any iteration, the products $\mathbf{A}^H \hat{\mathbf{U}}_w$ and $\mathbf{D}^H \hat{\mathbf{U}}_w$ would be computed using the method according to this invention described in section II-A (Interpolation of the Fourier sum in equation (24)).

A numerical comparison follows now (part III).

We have numerically compared Iterative MODE, the MVP method with Horner's synthetic division (H-MVP), and the MVP method with interpolated correlation (IMVP) in order to assess their computational burdens. For this, it was necessary to implement the most efficient versions, and to device a reliable flop count procedure. We discuss this topic in the following two subsections, and then we present a numerical example.

III-A: Implementation of Iterative MODE

Though it is not discussed in this correspondence, we have implemented the MODE iteration in the most efficient known way (Yingbo Hua: "The most efficient implementation of the IQML algorithm", IEEE Transactions on Signal Processing, Vol. 42, pp. 2203-2204, August 1994, and Jian Li, Petre Stoica, and Zheng-She Liu: "Comparative study of IQML and MODE direction-of-arrival estimators", IEEE Transactions on Signal Processing, Vol. 46, pp. 149-160, January 1998):

- The matrix inversion required in the MODE iteration has been performed through a band Cholesky decomposition and solving a band triangular system.
- The elementary operations have been reduced to a minimum, and the same criteria has been applied in the flop count to the MODE and the MVP iterations.

The implementation of RELAX followed aforementioned Zheng-She Liu, Jian Li, and Petre Stoica: "RELAX-based estimation of damped sinusoidal parameters", in Signal Processing Journal, Vol. 62, pp. 311-321, Nov. 1997.

III-B: Comparison of the number of flops

The flop counts provided by some standard packages are often too coarse. Therefore, it was necessary to device an alternative procedure. We computed an accurate flop count by programming the MODE, MVP, and RELAX iterations using only elementary operations, and then incrementing a flop counter at each of them. The cost of the eigenvalue computation in MODE was not accounted, because it may vary depending on the specific parameter values, and also on the specific algorithm employed. In RELAX, the cost was the sum of the FFTs cost plus the cost of the few evaluations of the periodogram-like functions required by the line searches.

The MODE and MVP iterations have a cost that is approximately polynomial in $M$, $K$ and $\tilde{K}$, due to the fact that most of the operations involved in their computation, like matrix sums and products, have a polynomial cost. An exception is the eigenvalue problem in MODE. The cost assuming $\tilde{K} = K$ for any $M$, $K$ is given by

$$\text{IMODE cost: } \left(\frac{311}{30}M - \frac{785}{3}\right)K^3 + \left(\frac{14832}{307}M + \frac{23705}{21}\right)K^2 + \left(-\frac{6843}{148}M - \frac{18129}{7}\right)K + \left(\frac{15193}{210}M + \frac{15300}{7}\right) \text{ flops .}$$

$$\text{H-MVP cost: } 16MK^2 + \frac{122}{3}K^3 + 32K^2 - \frac{41}{3}K + 1 \text{ flops.}$$

$$\text{I-MVP cost: } 8N_IK^2 + \frac{122}{3}K^3 + 32K^2 - \frac{41}{3}K + 1 \text{ flops.}$$

These expressions were obtained by fitting a polynomial to the iteration costs for many different values of $M$ and $K$.

III-C: Example

We have simulated the following scenario:

M = 10 sensors with $\lambda/2$-spacing;
K = 2 uncorrelated signals with equal powers;
$\tilde{K} = K$;
w = $[0.57, 1.15]^T$ (rad);
N = 100 snapshots.

The MVP and RELAX methods were started with the initial estimation in Iterative MODE. The costs of initialising and finishing the iterative procedures were not taken into account, i.e., the costs of the following operations were not accounted: the polynomial rooting required to initialise the MVP method, the computation of the initial amplitudes in RELAX, and the computation of the polynomial rooting required in the final step of 2step MODE and Iterative MODE. These exclusions allowed for a fair comparison. The iteration process was stopped in all methods when the error was smaller than $10^{-4}$.

Fig.2 and 3 show the Root-Mean-Square (RMS) error and the Probability of Resolution of 2-Step MODE, Iterative MODE, and of the MVP method. The results in these two figures are analogous to the ones in the literature, (Harry L. van Trees: "Detection, Estimation and Modulation Theory. Part IV", John Wiley & Sons, Inc., First Edition, 2002, section 8.7), and they confirm the validity of the MVP method.

Fig.4, 5 and 6 present the average number of flops, the average number of iterations, and the percentage of invalid trials for the three methods. A trial was declared invalid when it required more than 30 iterations. The number of flops in each iteration was from 2 to 2.8 times smaller in the MVP method than in Iterative MODE. In this example, the MODE and MVP iterations required 1958 and 1067 flops, respectively. We can see that the MVP method requires less iterations than Iterative MODE for any signal-to-noise ratio (SNR). For high SNRs, the MVP method only requires 1 or 2 iterations and, therefore, its computational burden is comparable to the one of 2-Step MODE. The percentage of invalid trials of both methods is quite similar.

This invention presents an efficient implementation of the Modified Variable Projection (MVP) method for the estimation of the angles of arrival to a Uniform Linear Array. Its computational burden is very small for two reasons. First, there are closed-form expressions of the correlation matrices that appear in the MVP iteration and, therefore, they can be calculated in $O(K^2)$ real flops. Second, it is possible to perform the correlation with the data matrix through a set of polynomial evaluations, without computing any exponential. We provided accurate expressions of the computational burdens of Iterative MODE and of the MVP method. In the numerical example, the MVP iteration roughly required half the number of operations required by the MODE iteration and, for high signal-to-noise ratios, the MVP method and 2-Step MODE have similar computational burdens.

## Claims

1. A method for estimating the parameters of several superimposed signals and/or signal replicas by use of a computation method of the Maximum Likelihood (ML) estimations based on the Modified Variable Projection (MVP) algorithm modelling a uniform and linear array of sensors receiving said signals and/or signal replicas, **characterised by** decoupling said computation into two steps, the first one computing a matrix of interpolation coefficients by performing some Fast Fourier Transforms (FFTs), and the second one performing an iterative procedure, both steps in application to the MVP-method.

2. A method as claimed in claim 1, **characterised in that** the respective parameters to estimate are the Directions of Arrival (DOA) of several signals and/or signal replicas to a linear and uniform antenna array.

3. A method as claimed in claim 1, **characterised in that** the respective parameters to estimate are the frequencies of several signals being undamped exponentials.

4. A method as claimed in claim 1, **characterised in that** the respective parameters to estimate are the delays of several signals for large observation intervals or for signals with approximate finite domain.

5. A method as claimed in one of claims 1 to 4 to perform channel sounding.

## Patentansprüche

1. Verfahren zur Schätzung von Parametern von mehreren überlagerten Signalen und/oder Signalreplikas durch Verwendung eines Berechnungsverfahrens der Maximum-Likelihood(ML)-Schätzungen auf der Grundlage des Modified-Variable-Projection(MVP)-Algorithmus, wobei eine gleichförmige und lineare Gruppenanordnung von Sensoren modelliert wird, welche die genannten Signale und/oder Signalreplikas empfängt, **gekennzeichnet durch** eine Entkopplung der Berechnung auf zwei Schritte, wobei im ersten eine Matrix von Interpolationskoeffizienten **durch** Ausführen von einigen Fast-Fourier-Transformationen (FFTs) berechnet wird und im zweiten eine iterative Prozedur ausgeführt wird, beide Schritte in Anwendung auf die MVP-Methode.

2. Verfahren nach Anspruch 1, **dadurch gekennzeichnet, dass** die jeweils zu schätzenden Parameter die Einfallsrichtungen (Directions of Arrival; DOA) mehrerer Signale und/oder Signalreplikas auf eine lineare und gleichförmige Gruppenantennenanordnung sind.

3. Verfahren nach Anspruch 1, **dadurch gekennzeichnet, dass** die jeweils zu schätzenden Parameter die Frequenzen von mehreren Signalen sind, die ungedämpfte Exponentialgrößen sind.

4. Verfahren nach Anspruch 1, **dadurch gekennzeichnet, dass** die jeweils zu schätzenden Parameter die Verzögerungen mehrerer Signale für große Beobachtungsintervalle oder für Signale mit angenähert endlichem Bereich sind.

5. Verfahren nach einem der Ansprüche 1 bis 4 zum Durchführen einer Kanalsondierung (Channel Sounding).

**Revendications**

1. Procédé pour estimer les paramètres de plusieurs signaux superposés et/ou de répliques de signaux par utilisation d'un procédé de calcul des estimations de probabilité maximale (ML) basé sur l'algorithme de projection variable modifiée (MVP) modélisant un système uniforme et linéaire de capteurs recevant lesdits signaux et/ou les répliques de signaux, **caractérisé par** le fait de découpler ledit calcul en deux étapes, la première étape pour calculer une matrice de coefficients d'interpolation en effectuant des transformations de Fourier rapides (FFT) et la seconde en effectuant une procédure itérative, les deux étapes dans l'application du procédé MVP.

2. Procédé selon la revendication 1, **caractérisé en ce que** les paramètres respectifs à estimer sont les directions d'arrivée (DOA) de plusieurs signaux et/ou de répliques de signaux sur un système d'antennes linéaires et uniformes.

3. Procédé selon la revendication 1, **caractérisé en ce que** les paramètres respectifs à estimer sont les fréquences de plusieurs signaux qui sont des exponentiels non amortis.

4. Procédé selon la revendication 1, **caractérisé en ce que** les paramètres respectifs à estimer sont les retards de plusieurs signaux pour des intervalles d'observation importants ou pour des signaux avec un domaine fini approximatif.

5. Procédé selon l'une des revendications 1 à 4 pour effectuer le sondage de canaux.

for $k = 1$ to $K$
    for $r = 1$ to $\tilde{K}$
        $[\mathbf{M}]_{k,r} = [\hat{\mathbf{U}}_{\mathrm{w}}]_{M,r}$, $[\mathbf{M}_{\mathrm{D}}]_{k,r} = 0$
        for $m = M$ down to 1
            $[\mathbf{M}_{\mathrm{D}}]_{k,r} = [\mathbf{M}_{\mathrm{D}}]_{k,r} \cdot z_k^* + [\mathbf{M}]_{k,r}$
            $[\mathbf{M}]_{k,r} = [\mathbf{M}]_{k,r} \cdot z_k^* + [\hat{\mathbf{U}}_{\mathrm{w}}]_{m,r}$
        end
        $[\mathbf{M}_{\mathrm{D}}]_{k,r} = [\mathbf{M}_{\mathrm{D}}]_{k,r} \cdot (-j z_k^*)$
    end
end

Fig.1

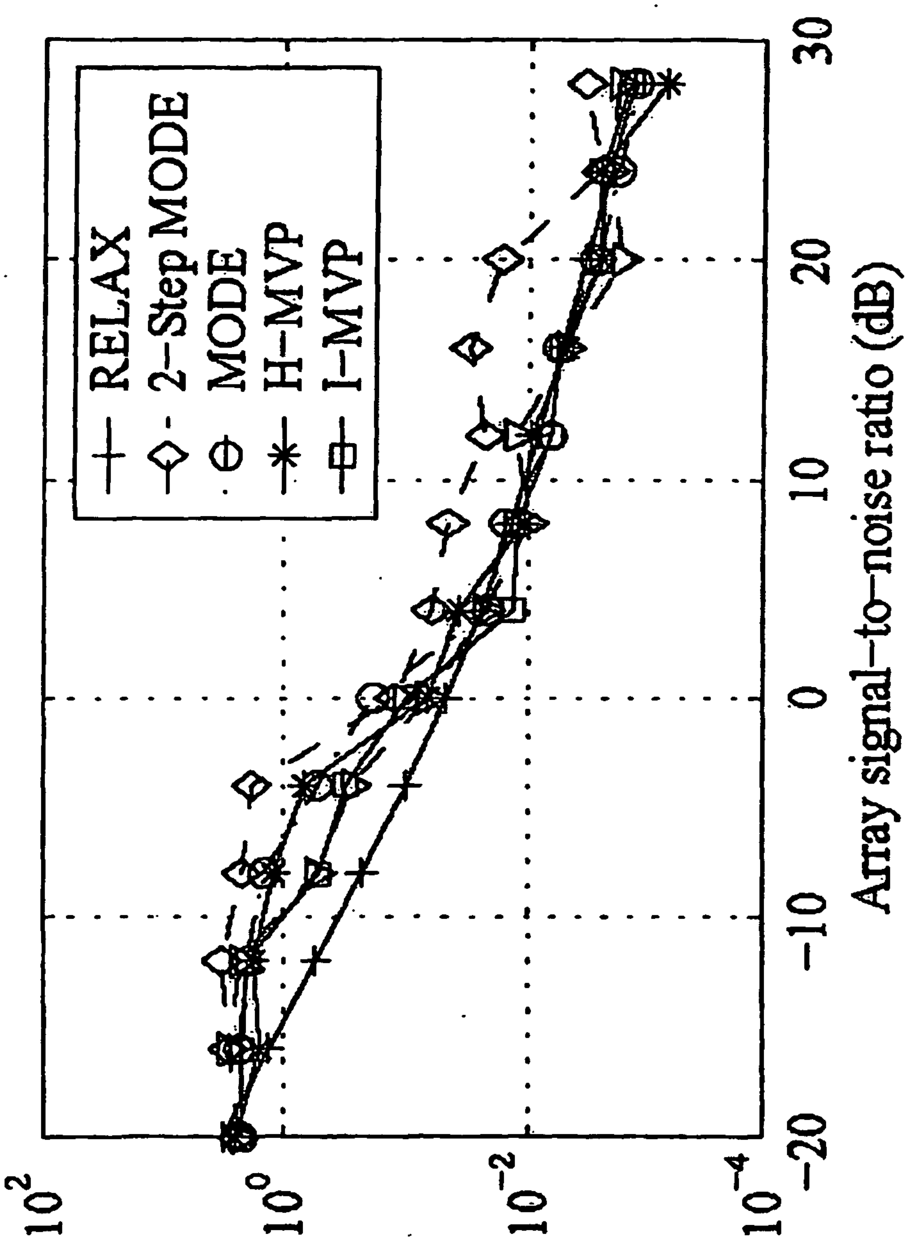
RELAX
2−Step MODE
MODE
H−MVP
I−MVP
RMS error (rad)
10^2
10^0
10^-2
10^-4
−20
−10
0
10
20
30
Array signal−to−noise ratio (dB)

Fig.2

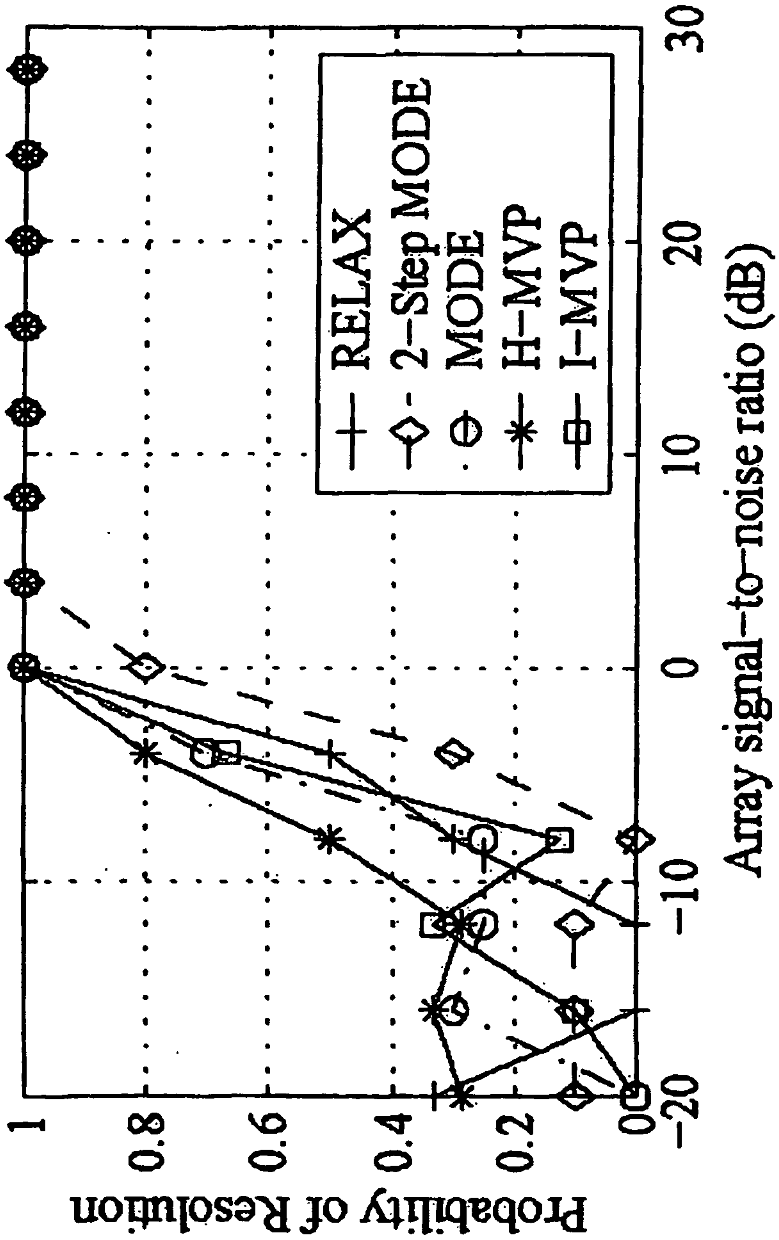
RELAX
2-Step MODE
MODE
H-MVP
I-MVP
Probability of Resolution
Array signal-to-noise ratio (dB)
1
0.8
0.6
0.4
0.2
0
-20
-10
0
10
20
30

Fig.3

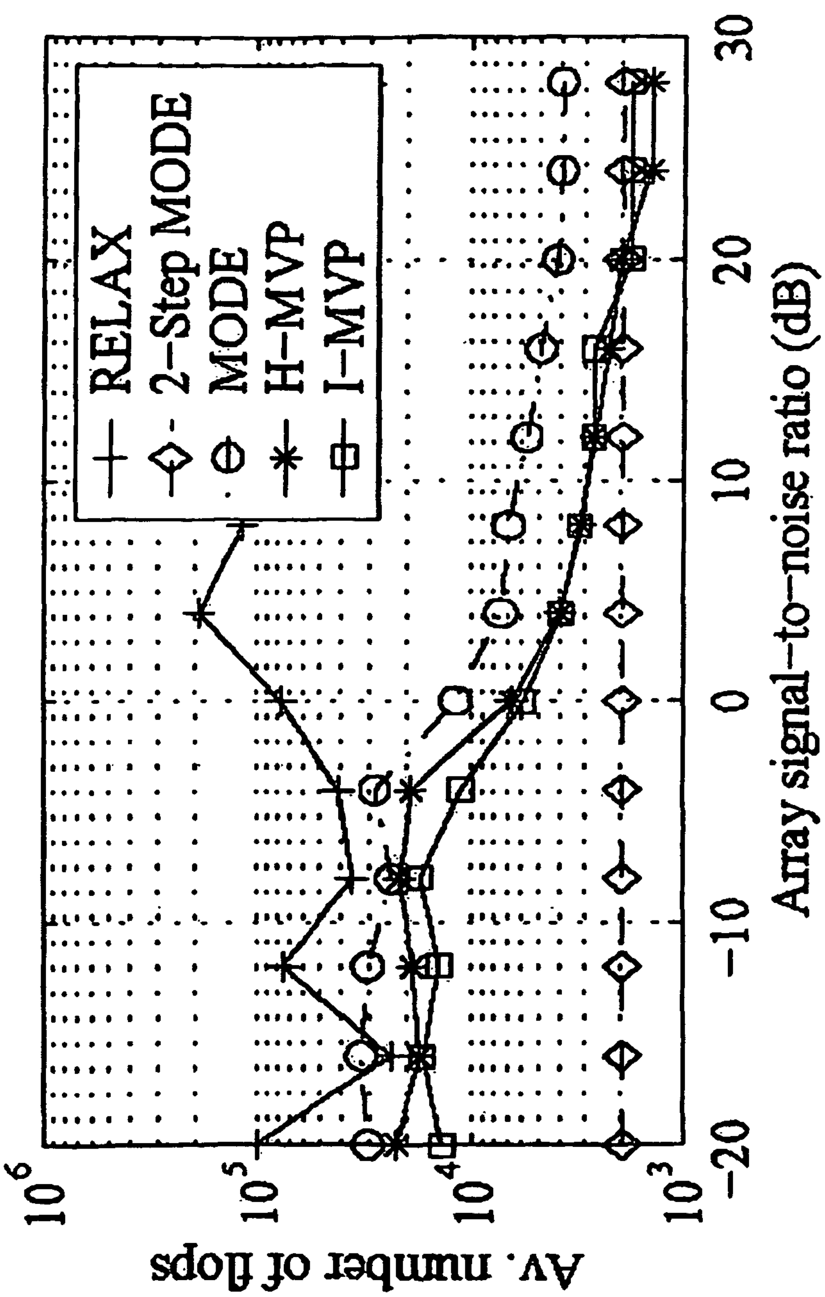
RELAX
2-Step MODE
MODE
H-MVP
I-MVP
Av. number of flops
Array signal-to-noise ratio (dB)
$10^6$
$10^5$
$10^4$
$10^3$
-20
-10
0
10
20
30

Fig.4

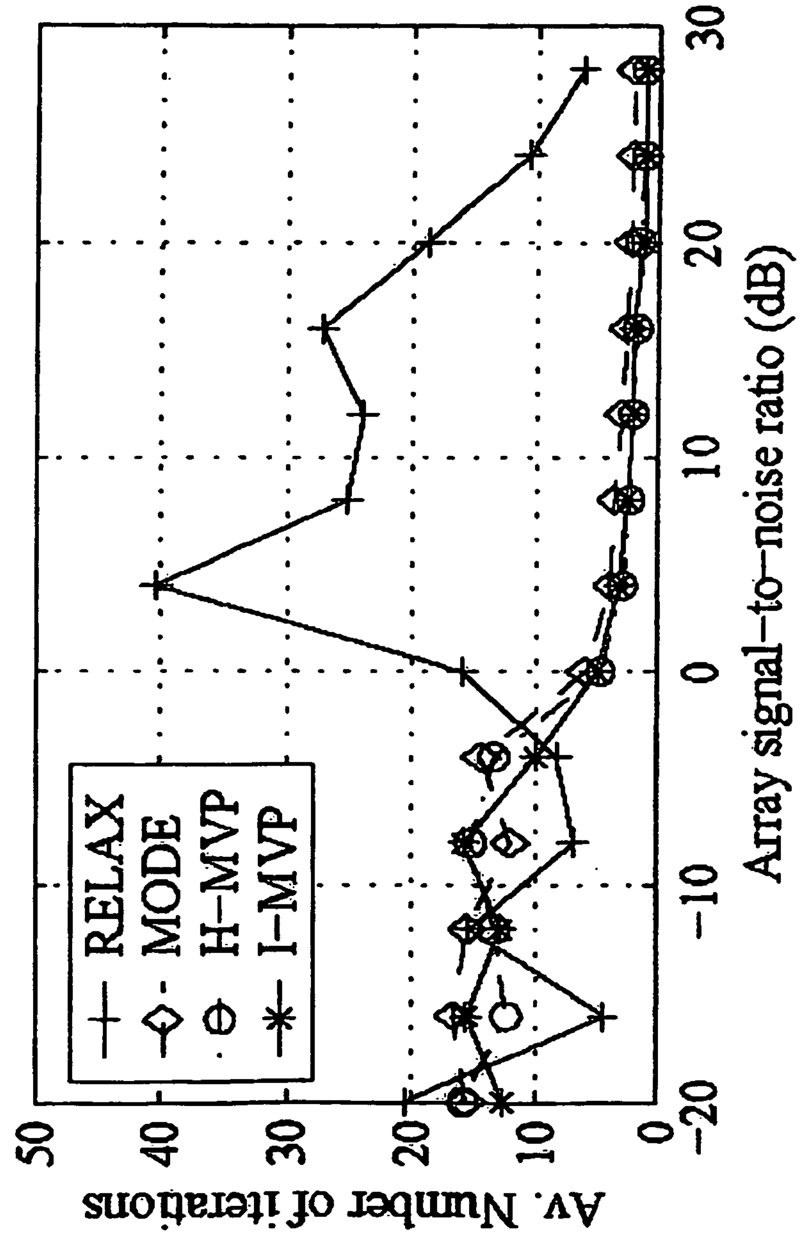
RELAX
MODE
H–MVP
I–MVP
Av. Number of iterations
50
40
30
20
10
0
−20
−10
0
10
20
30
Array signal–to–noise ratio (dB)

Fig.5

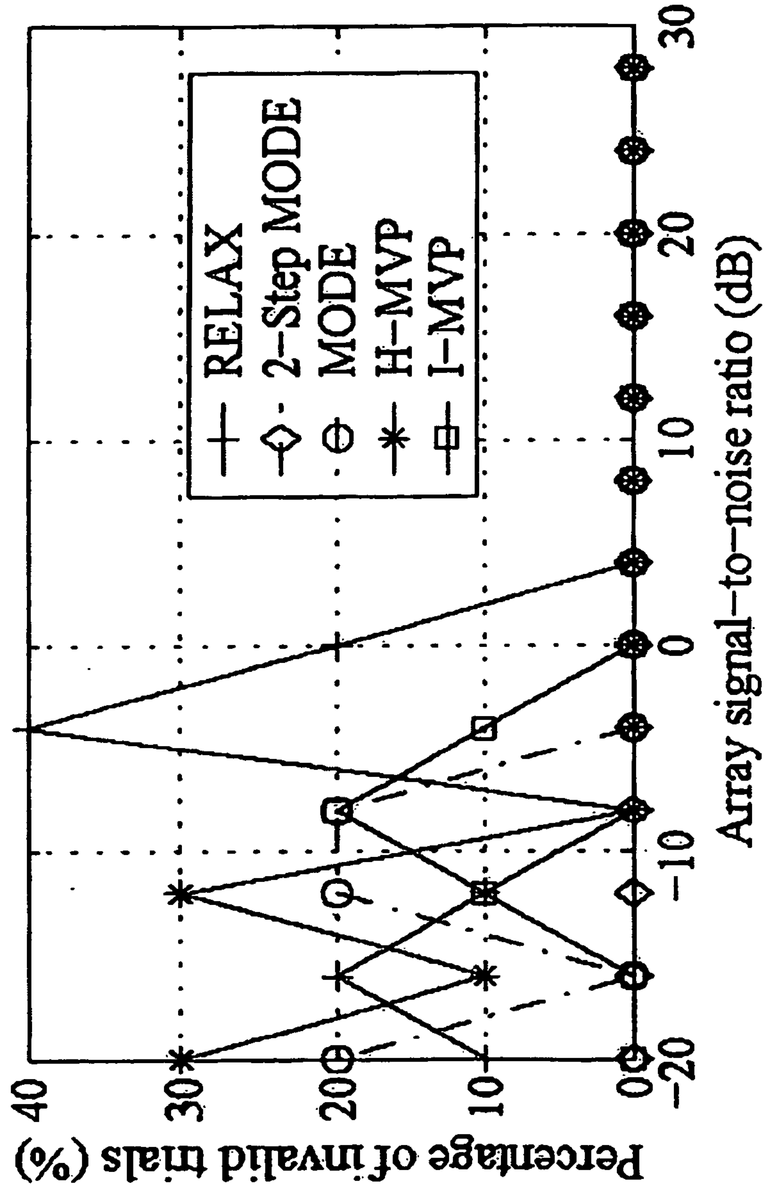
RELAX
2–Step MODE
MODE
H–MVP
I–MVP
Percentage of invalid trials (%)
Array signal–to–noise ratio (dB)
0
10
20
30
40
–20
–10
0
10
20
30

Fig.6